# FASCICULE DE BREVET EUROPEEN

(11) **EP 4 146 914 B1**
(45) Date de publication et mention de la délivrance du brevet: **24.04.2024**
(21) Numéro de dépôt: 21731230.5
(22) Date de dépôt: 23.04.2021
(51) Int. Cl.: F01D 11/00

(54) **PLATEFORME POUR UN ROTOR DE SOUFFLANTE D'UNE TURBOMACHINE D'AÉRONEF ET TURBOMACHINE ASSOCIÉE D'AÉRONEF**
PLATFORM FÜR EINEN FANROTOR EINER FLUGZEUGTURBOMASCHINE UND ZUGEHÖRIGE FLUGZEUGTURBOMASCHINE
PLATFORM FOR A FAN ROTOR OF AN AIRCRAFT TURBOMACHINE AND ASSOCIATED AIRCRAFT TURBOMACHINE

(30) Priorité: 04.05.2020 FR 2004399
(43) Date de publication de la demande: 15.03.2023
(73) Titulaire: Safran Aircraft Engines, 75015 Paris (FR)
(72) Inventeur: DUCHATELLE, Thierry François Maurice, 77550 MOISSY-CRAMAYEL (FR); PERRIN, Yann André Maurice, 77550 MOISSY-CRAMAYEL (FR)
(74) Mandataire: Gevers & Orès
(86) Numéro de dépôt international: PCT/FR2021/050716
(87) Numéro de publication internationale: WO 2021/224561

(56) Documents cités:
- EP-A1- 3 482 050
- EP-A1- 3 536 909
- EP-A1- 3 693 548
- EP-A1- 3 736 412
- EP-B1- 1 970 537
- EP-B1- 3 482 050
- EP-B1- 3 536 909
- WO-A1-2017/006054
- US-A- 5 281 096
- US-A1- 2019 112 934

## Description

### Domaine technique de l'invention

La présente invention concerne une plateforme pour un rotor de soufflante d'une turbomachine d'aéronef et une turbomachine d'aéronef comportant une telle plateforme.

### Arrière-plan technique

L'arrière-plan technique comprend notamment les documents EP-A1-3 536 909A1, US-A-5,281,096, US-A1-2019/0112934, EP-A1-3 482 050 et WO-A1-2018/007717.

Il est connu de l'état de la technique un rotor de soufflante ayant un axe de rotation et comportant un disque de soufflante et des pales ou aubes de soufflante comportant des pieds emmanchés dans des alvéoles de la périphérie du disque. Chaque pale comprend un intrados, un extrados, un bord d'attaque et un bord de fuite.

Le rotor de soufflante comprend en outre des plateformes intercalées entre les pales de soufflante et fixées à la périphérie du disque. Chaque plateforme comporte une face externe aérodynamique s'étendant le long dudit axe sensiblement depuis les bords d'attaque jusqu'aux bords de fuite des pales entre lesquelles cette plateforme est montée. Un tel rotor de soufflante est connu notamment du document EP-A1-1 970 537.

D'un point de vue aérodynamique, chaque plateforme a pour fonction première de définir la veine d'entrée d'air dans la turbomachine. En outre, les plateformes doivent aussi être capables de résister à des efforts importants sans se déformer et en restant solidaires du disque qui les porte. De plus, chaque plateforme doit satisfaire à toutes les conditions d'opérations, à savoir assurer les performances pour toute l'enveloppe de fonctionnement, par exemple pour un vol d'aéronef, garantir les exigences de sécurité et garantir la disponibilité du rotor comme partie du moteur pour un usage commercial.

En ce qui concerne la sécurité, chaque plateforme doit être apte à amortir une quantité importante d'énergie par écrasement de ses bords latéraux qui longent respectivement un intrados d'une aube et un extrados d'une aube adjacente.

Afin de satisfaire ces différentes exigences, certaines configurations ont été proposées dans lesquelles les plateformes possèdent chacune une paroi comprenant une première partie permettant de définir la veine d'entrée d'air et d'assurer la rétention de la plateforme lorsque le moteur est en rotation, et une deuxième partie située du côté du disque et permettant de limiter les déformations de la première partie sous les effets des efforts centrifuges et de maintenir la plateforme en position lorsque le moteur est à l'arrêt.

Par ailleurs, sur les nouveaux moteurs, la recherche de performances pousse à abaisser le rapport de moyeu pour gagner en section aérodynamique, comme décrit dans la publication WO-A1-2017/006054. Ceci mène à imposer un espace entre la veine et le disque de plus en plus réduit et donc une épaisseur de la paroi de plus en plus réduite.

En conséquence, la plateforme se retrouve à devoir conjuguer un besoin de raideur pour fléchir le moins possible sous l'effort centrifuge, et un besoin d'encombrement limité qui empêche d'intégrer une paroi (ou caisson) trop encombrante qui pourrait apporter le niveau de raideur souhaité.

La présente invention a notamment pour but de résoudre tout ou partie des problèmes précités.

### Résumé de l'invention

L'invention propose à cet effet une plateforme pour un rotor de soufflante d'une turbomachine d'aéronef, cette plateforme étant configurée pour être solidaire d'un disque de soufflante entre deux aubes de soufflante adjacentes, la plateforme comportant une paroi longitudinale définissant une face externe aérodynamique, ladite paroi comprenant une structure en nid d'abeilles intercalée entre deux peaux en matériau composite respectivement interne et externe, la peau externe définissant ladite face externe aérodynamique.

Selon l'invention, la peau externe comprend une structure tissée en trois dimensions et la peau interne comprend une structure stratifiée.

De plus, selon l'invention, la peau externe a une épaisseur supérieure à celle de la peau interne.

Avec l'architecture en nid d'abeilles de l'invention, la masse volumique de la plateforme est réduite par rapport à une plateforme pleine de l'art antérieur tout en gardant une bonne rigidité de manière à mieux résister à l'effort centrifuge.

En effet, lorsque l'épaisseur de la structure en nid d'abeilles et donc de la paroi est augmentée, le gain du moment quadratique de la paroi se fait au cube sans augmentation de masse significative, c'est-à-dire sans entraîner d'augmentation de l'effort centrifuge. L'augmentation de l'épaisseur permet ainsi un gain sur la flèche au cube de l'épaisseur. En revanche, dans une architecture pleine de l'art antérieur, une augmentation de l'épaisseur permet toujours un gain du moment quadratique de la paroi au cube mais entraîne également une augmentation de l'effort centrifuge. Dans ce dernier cas, l'augmentation de l'épaisseur entraine seulement un gain sur la flèche au carré de l'épaisseur.

L'ajustement de l'épaisseur de la paroi de la plateforme de l'invention permet ainsi d'augmenter la résistance à l'effort centrifuge de la plateforme et/ou de réduire l'encombrement de la plateforme.

La peau externe comprend une structure tissée en trois dimensions, ce qui permet de lui conférer une résistance accrue notamment aux impacts. Sa résistance aux impacts est notamment due à sa capacité à ne pas se délaminer.

La peau interne comprend une structure stratifiée, ce qui permet d'accentuer sa raideur mécanique, notamment dans le but de limiter ses déformations. La structure stratifiée donne une liberté quasi-totale de réglage de la raideur en jouant sur les directions et le nombre de couches superposées.

A la fois les peaux interne et externe peuvent être à base de fibres.

Les structures des peaux sont donc adaptées pour améliorer la tenue mécanique de la plateforme en fonctionnement.

La plateforme selon l'invention peut comprendre une ou plusieurs des caractéristiques ci-dessous, prises isolément les unes avec les autres ou en combinaison les unes avec les autres :
- la peau externe comprend des orifices débouchant dans lesdites alvéoles de façon à conférer à la plateforme une fonction acoustique;
- la structure en nid d'abeilles comprend des alvéoles qui s'étendent sensiblement perpendiculairement à au moins la peau externe ;
- la peau interne comprend des orifices débouchant dans lesdites alvéoles de façon à conférer à la plateforme une fonction acoustique ;
- la structure en nid d'abeilles a une épaisseur qui varie entre des extrémités longitudinales de la paroi et/ou entre des extrémités latérales de la paroi ;
- la plateforme comprend au moins une patte de fixation au disque de soufflante, cette patte de fixation comportant un orifice de passage d'une vis ; cette patte est par exemple située à une extrémité longitudinale située du côté amont de la plateforme et du disque et/ou par exemple sensiblement à mi-distance des extrémités amont et aval de plateforme et du disque ;
- la structure en nid d'abeilles s'étend sur une partie seulement de la dimension longitudinale de la paroi ;
- selon une caractéristique non revendiquée, la structure en nid d'abeilles s'étend sur sensiblement toute la dimension longitudinale de la paroi ;
- selon une caractéristique non revendiquée, la structure en nid d'abeilles s'étend entre deux pattes de fixation ;
- selon une caractéristique non revendiquée, une patte de fixation est située à une extrémité longitudinale de la paroi ;
- selon une caractéristique non revendiquée, une patte de fixation est située sensiblement au milieu de la paroi ; et
- la peau externe a une épaisseur comprise entre 2 et 20mm, et plus préférentiellement entre 5 et 10mm, et la peau interne a une épaisseur comprise entre 0,5 et 5mm, et plus préférentiellement entre 1 et 3mm.

L'invention concerne également une turbomachine d'aéronef, comportant un rotor de soufflante comprenant un disque de soufflante portant des aubes, des plateformes telles que décrites précédemment étant intercalées entre lesdites aubes.

### Brèves descriptions des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique en coupe axiale d'un rotor de soufflante ;
[Fig.2] la figure 2 est une vue en perspective d'une plateforme selon l'invention ;
[Fig.3] la figure 3 est une vue schématique d'une structure en nid d'abeilles de la plateforme selon un plan de coupe sensiblement parallèle à une extension longitudinale de la plateforme de la figure 2 ;
[Fig.4] la figure 4 est une vue en perspective de la plateforme de la figure 2 selon une variante de réalisation ;
[Fig.5] la figure 5 est une vue en perspective de la plateforme de la figure 4 selon un angle de vue différent ;
[Fig.6] la figure 6 est une vue en coupe axiale d'une structure en nid d'abeilles de la plateforme de la figure 4 ;
[Fig.7] la figure 7 est une vue en perspective de la plateforme de la figure 2 selon une variante de réalisation ; et
[Fig.8] la figure 8 est une vue en perspective de la plateforme de la figure 7 selon un angle de vue différent.

### Description détaillée de l'invention

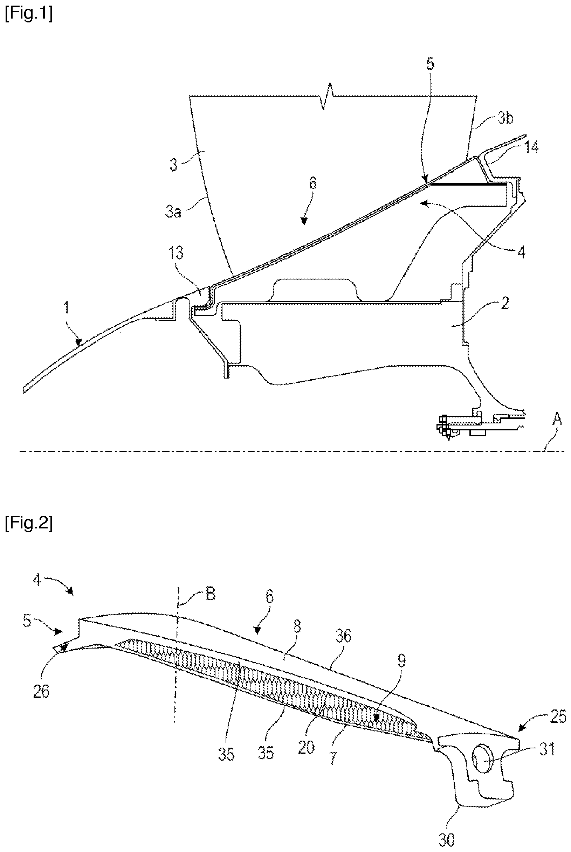

On se réfère d'abord à la figure 1 qui montre une vue partielle en coupe axiale d'un rotor 1 de soufflante d'une turbomachine d'aéronef. Le rotor 1 a un axe longitudinal de rotation A et comporte un disque 2 de soufflante et des pales 3 ou aubes de soufflante comportant comme dispositif de rétention des pieds emmanchés dans des alvéoles de la périphérie du disque 2. Chaque pale 3 comprend un intrados, un extrados, un bord d'attaque 3a et un bord de fuite 3b.

Le rotor 1 comprend également une virole amont 13 et une virole aval 14, les deux viroles 13, 14 étant solidarisées au disque 2 de soufflante.

Le rotor 1 de soufflante comprend des plateformes 4 configurées pour être solidaires du disque 2 de soufflante entre deux aubes 3 de soufflante adjacentes. Les plateformes 4 sont intercalées entre les aubes 3 de soufflante et fixées ou maintenues radialement à la périphérie du disque 2. Chaque plateforme 4 comporte une face externe aérodynamique 6 s'étendant le long dudit axe A sensiblement depuis les bords d'attaque 3a jusqu'aux bords de fuite 3b des aubes 3 entre lesquelles cette plateforme 4 est montée. La plateforme 4 comporte une paroi longitudinale 5 définissant la face externe 6 aérodynamique. La figure 1 montre un rotor 1 de soufflante d'une turbomachine d'aéronef dont les plateformes sont telles que l'invention vise à améliorer en particulier pour mieux traiter les efforts centrifuges en encore plus particulièrement concernant la paroi longitudinale et la stabilité en service de sa face externe 6.

Comme illustré à la figure 2, la paroi 5 comprend une première extrémité longitudinale 25, située du côté amont de la plateforme 4, c'est-à-dire destinée à être située du côté du bord d'attaque des aubes, et une deuxième extrémité longitudinale 26 située du côté aval de la plateforme 4, c'est-à-dire destinée à être située du côté des bords de fuite des aubes. Ces extrémités longitudinales 25, 26 sont destinées à coopérer avec les viroles du rotor de soufflante. A l'extrémité longitudinale 25 côté amont, un appui centrifuge intervient avec la virole amont 13 correspondante. A l'extrémité longitudinale 26 côté aval, un appui centrifuge intervient avec la virole aval 14 correspondante. Ces appuis radiaux peuvent aussi être associés à des appuis longitudinalement inclinés.

La paroi 5 comprend également deux bords latéraux ou extrémités latérales 35, 36, dont un premier bord latéral 35 est destiné à être situé du côté d'un intrados des pales et un deuxième bord latéral 36 est destiné à être situé du côté d'un extrados des pales.

La plateforme 4 comprend en outre au moins une première patte 30 de fixation au disque de soufflante. La première patte 30 de fixation comporte notamment un orifice 31 de passage d'une vis de fixation au disque. La première patte 30 de fixation est par exemple située à une des extrémités longitudinales 25, 26 de la paroi 5 et notamment la première extrémité longitudinale 25. Alternativement, la première patte 30 de fixation est située sensiblement au milieu de la paroi 5, sensiblement à mi-distance de ses extrémités amont et aval.

La paroi 5 comprend une structure en nid d'abeilles 20. La paroi 5 comprend en outre deux peaux 7, 8 respectivement interne 7 et externe 8, la peau externe 8 définissant la face externe 6 aérodynamique. Les deux peaux 7, 8 s'étendent sensiblement parallèlement.

La structure en nid d'abeilles 20 est située entre les deux peaux 7, 8, notamment dans une cavité 9 délimitée par les deux peaux 7, 8. Ainsi, l'invention propose de réaliser une structure en sandwich dans lequel les deux peaux 7, 8 viennent prendre en sandwich la structure en nid d'abeilles 20. La structure en nid d'abeilles 20 s'étend notamment sur sensiblement toute la dimension longitudinale de la paroi 5.

Les peaux 7, 8 sont selon l'invention en matériau composite. Elles peuvent être ajustées pour remplir au mieux les fonctions de la plateforme 4.

Par exemple, les peaux 7, 8 peuvent comprendre chacune une structure stratifiée ou tissée.

La peau externe 8 comprend selon l'invention une structure tissée en trois dimensions. La peau externe 8 est alors particulièrement résistante, notamment dans le but de bien résister à un impact direct d'oiseau.

La peau interne 7 comprend selon l'invention une structure stratifiée. La peau interne 7 présente ainsi une raideur mécanique supérieure, notamment dans le but de limiter les déformations de la peau externe 8, et il sera donc possible d'utiliser une peau interne 7 plus fine et donc plus légère.

En réalisant notamment la peau interne 7 avec une structure autre qu'une structure tissée en trois dimensions, l'invention permet en particulier de réduire le nombre de préforme tissée trois dimensions à réaliser et donc de simplifier le procédé de fabrication de la plateforme 4.

L'épaisseur de la peau externe 8 est selon l'invention plus importante que celle de la peau interne 7 car elle doit notamment absorber les impacts potentiels provenant de l'environnement extérieur. La peau externe 8 a de préférence une épaisseur comprise entre 2 et 20mm, et plus préférentiellement entre 5 et 10mm. La peau interne 7 a de préférence une épaisseur comprise entre 0,5 et 5mm, et plus préférentiellement entre 1 et 3mm.

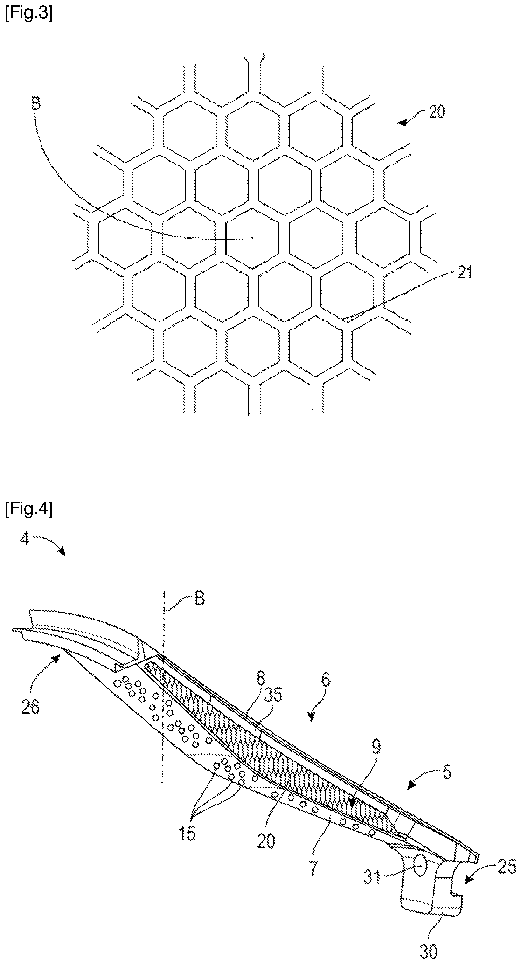

La structure en nid d'abeilles 20, comme illustré sur la figure 3, comprend des alvéoles 21 qui s'étendent sensiblement perpendiculairement au moins à la peau externe 8 voire également à la peau interne 7. On comprend ici que les alvéoles 21 s'étendent selon un axe B, transversal à l'axe A et en particulier sensiblement parallèlement aux aubes. La structure en nid d'abeilles 20, de par ses propriétés mécaniques élevées à l'écrasement, peut amortir et absorber des efforts importants, notamment en cas de perte d'aube.

Comme illustré sur la figure 4, la présence de la structure en nid d'abeilles 20 entre les peaux interne 7 et externe 8 permet par exemple d'intégrer une fonction de traitement acoustique. L'une des peaux, et par exemple la peau interne 7, comprend notamment pour cela des orifices 15 débouchant chacun dans une alvéole distincte de la structure en nid d'abeilles 20 de façon à créer une pluralité de résonateur de Helmholtz.

En effet, un résonateur de Helmholtz est un système acoustique comprenant une ouverture de petite taille ou « col du résonateur » (ici un orifice 15), raccordée à un volume de grandes dimensions ou « bouteille du résonateur » formant une cavité résonante (ici une alvéole). Des paramètres des alvéoles et des orifices, tels que leurs formes et leurs dimensions, sont alors configurés pour que la plateforme 4, grâce à sa fonction de résonateur de Helmholtz, soit apte à absorber des bruits dans une plage de fréquences donnée, par exemple de manière à limiter le bruit de la turbomachine.

Alternativement, la cavité 9 peut être remplie de mousse afin d'éviter que de l'humidité ne se stocke à l'intérieure de la cavité 9.

Il est possible en variante de prévoir de tels résonateurs à orifice en peau externe 8, remplie de mousse en évitant des désagréments aérodynamiques.

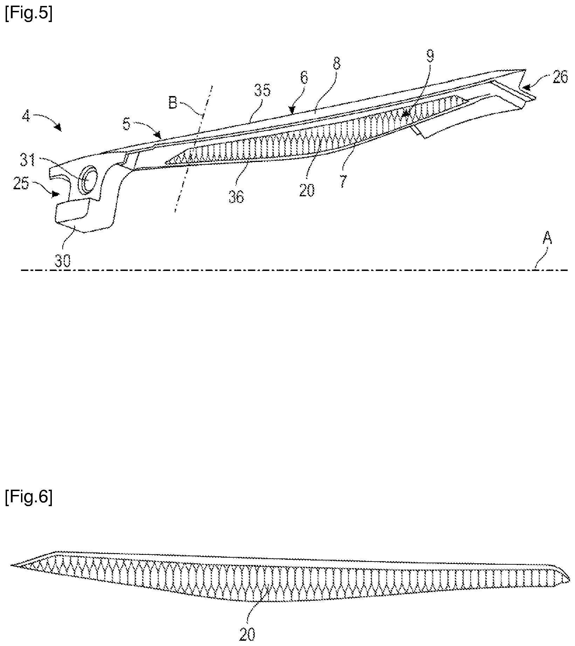

Comme illustré aux figures 4 et 5 ou de manière plus détaillée à la figure 6, la structure en nid d'abeilles 20 a par exemple une épaisseur qui varie entre les extrémités longitudinales 25, 26 de la paroi 5. Selon une variante de réalisation de l'invention non représentée, la structure en nid d'abeilles 20 peut également comprendre, en outre ou alternativement, une épaisseur qui varie entre les bords latéraux 35, 36 de la paroi 5.

Ces configurations dans lesquelles l'épaisseur de la structure en nid d'abeilles 20 varie, permettent d'obtenir une forme d'arche, pour avoir le moment quadratique maximum à l'endroit nécessaire afin notamment de mieux résister à l'effort centrifuge et avoir des hauteurs sous veine moins importantes (c'est-à-dire une épaisseur de paroi 5 moins importantes) aux endroits nécessaires. Avec cette technique, l'épaisseur de la structure en nid d'abeilles 20 est réglée suivant le besoin de raideur, qui variera principalement suivant la longueur de la plateforme 4 (dépendant directement de la corde de l'aube, c'est-à-dire la ligne externe allant du bord d'attaque au bord de fuite de l'aube), la vitesse de rotation du rotor et la position du centre de gravité de la plateforme 4. L'invention permet donc d'obtenir de la raideur dans le sens longitudinal de la plateforme 4, notamment dans le but de résister à l'effort centrifuge, tout en conservant par exemple en amont, c'est-à-dire du côté de la première extrémité 25, une hauteur sous veine la plus faible possible.

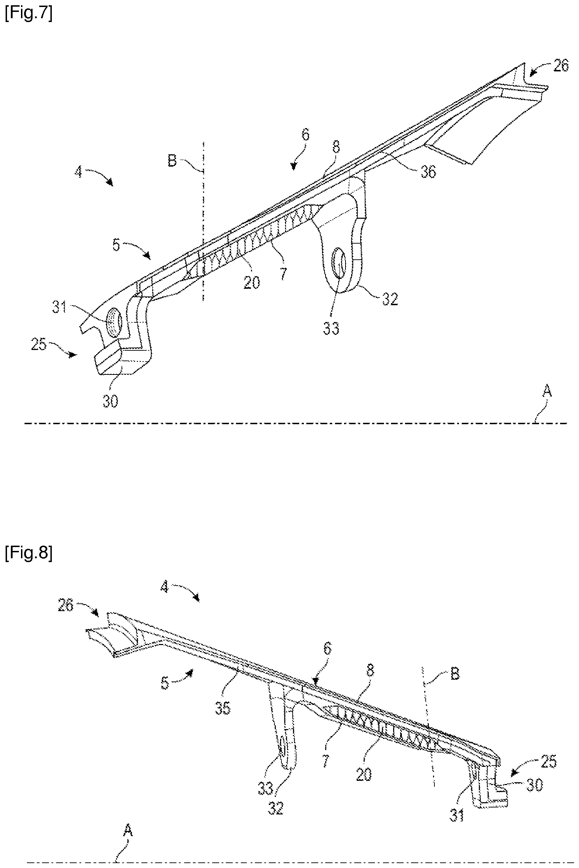

Comme illustré sur les figures 7 et 8, la plateforme 4 peut également comprendre une deuxième patte 32 de fixation, notamment pour amortir et absorber les impacts de l'effort centrifuge. Elle comprend notamment un orifice 33 de passage d'une vis.

La deuxième patte 32 de fixation est notamment située sensiblement au milieu de la paroi 5. Alternativement, la deuxième patte 32 de fixation peut être située à l'une des extrémités longitudinales 25, 26 de la paroi 5, notamment la première extrémité 25, lorsque la première patte 30 de fixation est située au milieu de la paroi 5.

Dans cet exemple de réalisation de l'invention, la structure en nid d'abeilles 20 s'étend sur une partie seulement de la dimension longitudinale de la paroi 5, par exemple entre les deux pattes de fixation 30, 32. L'épaisseur de la plateforme 4 peut dans ce cas être réduite uniquement à l'épaisseur des peaux 7, 8 dans la partie aval de la plateforme 4, c'est-à-dire ici entre la deuxième patte de fixation 32 et la deuxième extrémité longitudinale 26. La deuxième patte 32 de fixation et/ou la longueur réduite de la structure en nid d'abeilles peuvent bien sûr être présentes dans d'autres modes de réalisation de l'invention.

## Revendications

1. Plateforme (4) pour un rotor (1) de soufflante d'une turbomachine d'aéronef, cette plateforme (4) étant configurée pour être solidaire d'un disque (2) de soufflante entre deux aubes (3) de soufflante adjacentes, la plateforme (4) comportant une paroi longitudinale (5) définissant une face externe (6) aérodynamique, ladite paroi (5) comprenant une structure en nid d'abeilles (20) intercalée entre deux peaux (7 ; 8) en matériau composite respectivement interne (7) et externe (8), la peau externe (8) définissant ladite face externe (6) aérodynamique, **caractérisée en ce que** la peau externe (8) comprend une structure tissée en trois dimensions et la peau interne (7) comprend une structure stratifiée,
dans laquelle la peau externe (8) a une épaisseur supérieure à celle de la peau interne (7).

2. Plateforme (4) selon la revendication 1, dans laquelle la peau externe (8) comprend des orifices (15) débouchant dans lesdites alvéoles (21) de façon à conférer à la plateforme (4) une fonction acoustique.

3. Plateforme (4) selon la revendication 1, dans laquelle la peau interne (7) comprend des orifices (15) débouchant dans lesdites alvéoles (21) de façon à conférer à la plateforme (4) une fonction acoustique.

4. Plateforme (4) selon l'une des revendications précédentes, dans laquelle la structure en nid d'abeilles (20) comprend des alvéoles (21) qui s'étendent sensiblement perpendiculairement à au moins la peau externe (8).

5. Plateforme (4) selon l'une des revendications précédentes, dans laquelle la structure en nid d'abeilles (20) a une épaisseur qui varie entre des extrémités longitudinales (25 ; 26) de la paroi (5) et/ou entre des extrémités latérales de la paroi (5).

6. Plateforme (4) selon l'une des revendications précédentes, dans laquelle elle comprend en outre au moins une patte de fixation (30) au disque (2) de soufflante, cette patte de fixation (30) comportant un orifice (31) de passage d'une vis.

7. Plateforme (4) selon l'une des revendications précédentes, dans laquelle la structure en nid d'abeilles (20) s'étend sur une partie seulement de la dimension longitudinale de la paroi (5).

8. Plateforme (4) selon l'une des revendications précédentes, dans laquelle la peau externe (8) a une épaisseur comprise entre 2 et 20mm, et plus préférentiellement entre 5 et 10mm, et la peau interne (7) a une épaisseur comprise entre 0,5 et 5mm, et plus préférentiellement entre 1 et 3mm.

9. Turbomachine d'aéronef, comportant un rotor de soufflante comprenant un disque (2) de soufflante portant des aubes (3), des plateformes (4) selon l'une des revendications précédentes étant intercalées entre lesdites aubes (3).

## Patentansprüche

1. Plattform (4) für einen Gebläserotor (1) einer Flugzeugturbomaschine, wobei diese Plattform (4) konfiguriert ist, um fest mit einer Gebläsescheibe (2) zwischen zwei benachbarten Gebläseschaufeln (3) verbunden zu sein, wobei die Plattform (4) eine Längswand (5) umfasst, die eine aerodynamische Außenseite (6) definiert, wobei die Wand (5) eine Wabenstruktur (20) umfasst, die zwischen zwei jeweils inneren und äußeren Häuten (7; 8) aus Verbundwerkstoff eingeschoben ist, wobei die äußere Haut (8) die aerodynamische Außenseite (6) definiert, **dadurch gekennzeichnet, dass** die äußere Haut (8) eine in drei Dimensionen gewebte Struktur umfasst und die innere Haut (7) eine Laminatstruktur umfasst,
wobei die äußere Haut (8) eine Dicke größer als jene der inneren Haut (7) aufweist.

2. Plattform (4) nach Anspruch 1, wobei die äußere Haut (8) Öffnungen (15) umfasst, die in die Zellen (21) münden, um der Plattform (4) eine Akustikfunktion zu verleihen.

3. Plattform (4) nach Anspruch 1, wobei die innere Haut (7) Öffnungen (15) umfasst, die in die Zellen (21) münden, um der Plattform (4) eine Akustikfunktion zu verleihen.

4. Plattform (4) nach einem der vorstehenden Ansprüche, wobei die Wabenstruktur (20) Zellen (21) umfasst, die sich im Wesentlichen senkrecht zu mindestens der äußeren Haut (8) erstrecken.

5. Plattform (4) nach einem der vorstehenden Ansprüche, wobei die Wabenstruktur 20) eine Dicke aufweist, die zwischen Längsenden (25; 26) der Wand (5) und/oder zwischen seitlichen Enden der Wand (5) variiert.

6. Plattform (4) nach einem der vorstehenden Ansprüche, wobei sie weiter mindestens eine Befestigungslasche (30) an der Gebläsescheibe (2) umfasst, wobei diese Befestigungslasche (30) eine Öffnung (31) zum Durchführen einer Schraube umfasst.

7. Plattform (4) nach einem der vorstehenden Ansprüche, wobei sich die Wabenstruktur (20) nur über einen Teil der Längsabmessung der Wand (5) erstreckt.

8. Plattform (4) nach einem der vorstehenden Ansprüche, wobei die äußere Haut (8) eine Dicke aufweist, die zwischen 2 und 20 mm, und bevorzugter zwischen 5 und 10 mm liegt, und die innere Haut (7) eine Dicke aufweist die zwischen 0,5 und 5 mm, und bevorzugter zwischen 1 und 3 mm liegt.

9. Flugzeugturbomaschine, welches einen Gebläserotor umfasst, der eine Gebläsescheibe (2) umfasst, die Schaufeln (3) trägt, wobei Plattformen (4) nach einem der vorstehenden Ansprüche zwischen die Schaufeln (3) eingeschoben sind.

## Claims

1. A platform (4) for a fan rotor (1) of an aircraft turbomachine, this platform (4) being configured to be secured to a fan disk (2) between two adjacent fan vanes (3), the platform (4) comprising a longitudinal wall (5) defining an aerodynamic external face (6), said wall (5) comprising a honeycomb structure (20) interposed between two skins (7; 8) made of composite material, respectively internal (7) and external (8), the external skin (8) defining said aerodynamic external face (6), **characterised in that** the external skin (8) comprises a three-dimensional woven structure and the internal skin (7) comprises a stratified structure,
wherein the external skin (8) has a thickness greater than that of the internal skin (7).

2. The platform (4) according to claim 1, wherein the external skin (8) comprises orifices (15) opening into said cells (21) so as to provide the platform (4) with an acoustic function.

3. The platform (4) according to claim 1, wherein the internal skin (7) comprises orifices (15) opening into said cells (21) so as to provide the platform (4) with an acoustic function.

4. The platform (4) according to any one of the preceding claims, wherein the honeycomb structure (20) comprises cells (21) which extend substantially perpendicular to at least the external skin (8).

5. The platform (4) according to any one of the preceding claims, wherein the honeycomb structure (20) has a thickness that varies between longitudinal ends (25; 26) of the wall (5) and/or between lateral ends of the wall (5).

6. The platform (4) according to any one of the preceding claims, wherein it further comprises at least one fixing bracket (30) for attachment to the fan disk (2), said fixing bracket (30) comprising an orifice (31) for passage of a screw.

7. The platform (4) according to any one of the preceding claims, wherein the honeycomb structure (20) extends over only a part of the longitudinal dimension of the wall (5).

8. The platform (4) according to any one of the preceding claims, wherein the external skin (8) has a thickness of between 2 and 20mm, and more preferably between 5 and 10mm, and the internal skin (7) has a thickness of between 0.5 and 5mm, and more preferably between 1 and 3mm.

9. An aircraft turbomachine, comprising a fan rotor comprising a fan disk (2) carrying vanes (3), platforms (4) according to one of the preceding claims being interposed between said vanes (3).
